# EUROPÄISCHE PATENTSCHRIFT

(11) **EP 3 084 292 B1**
(45) Veröffentlichungstag und Bekanntmachung des Hinweises auf die Patenterteilung: **31.03.2021**
(21) Anmeldenummer: 14802014.2
(22) Anmeldetag: 20.11.2014
(51) Int. Cl.: F21S 43/14, F21S 43/237, F21S 43/239, F21S 43/245, F21S 43/247, F21S 43/249, G02B 6/00

(54) **KRAFTFAHRZEUGLEUCHTE MIT EINEM LICHTLEITER**
MOTOR VEHICLE LIGHT HAVING A LIGHTGUIDE
LAMPE DE VÉHICULE À MOTEUR ÉQUIPÉE D'UN GUIDE DE LUMIÈRE

(30) Priorität: 16.12.2013 DE 102013226133
(43) Veröffentlichungstag der Anmeldung: 26.10.2016
(73) Patentinhaber: Automotive Lighting Reutlingen GmbH, 72762 Reutlingen (DE)
(72) Erfinder: ZWICK, Hubert, 70184 Stuttgart (DE); KELLERMANN, Hermann, 72762 Reutlingen (DE)
(74) Vertreter: DREISS Patentanwälte PartG mbB
(86) Internationale Anmeldenummer: PCT/EP2014/075075
(87) Internationale Veröffentlichungsnummer: WO 2015/090822

(56) Entgegenhaltungen:
- EP-A1- 2 317 212
- EP-A1- 2 327 585
- EP-A1- 2 500 753
- EP-A2- 0 936 403
- WO-A1-88/05002
- DE-A1-102013 204 021
- US-A1- 2003 165 067
- US-A1- 2007 230 216
- US-A1- 2010 202 153

## Beschreibung

Die vorliegende Erfindung betrifft eine Kraftfahrzeugleuchte

Eine solche Kraftfahrzeugleuchte ist aus der DE 10 2013 204 021 A1 bekannt und weist einen Lichtleiter auf, der eine erste Längsseite und eine der ersten Längsseite gegenüberliegende zweite Längsseite aufweist. An der ersten Längsseite sind Umlenkelemente angeordnet, die dazu eingerichtet sind, aus dem Inneren des Lichtleiters auf sie einfallendes Licht so zur zweiten Längsseite umzulenken, dass das umgelenkte Licht dort so steil auftrifft, dass es über die zweite Längsseite aus dem Lichtleiter austritt. Die Umlenkelemente weisen ein Umlenkprisma mit einer ersten Reflexionsfläche und einer zweiten Reflexionsfläche auf. Außerdem weisen die Umlenkflächen noch eine dritte Reflexionsfläche auf.

Bei modernen Kraftfahrzeugen weisen insbesondere im Bugbereich angeordnete Signalleuchten wie Blinkleuchten und Tagfahrleuchten eine starke Pfeilung auf. Dabei wird unter einer Pfeilung hier ein Winkel zwischen einer Querachse des Fahrzeugs und einer Außenkontur einer transparenten Abdeckscheibe der Beleuchtungseinrichtung verstanden. Der Lichtleiter weist eine Längsrichtung auf, die in der Regel ebenfalls einen Winkel mit der Querachse einschließt, was im Folgenden auch als gepfeilte Anordnung bezeichnet wird.

Das Licht wird in den Lichtleiter über eine seiner schmalen Stirnseiten eingekoppelt. Bei der gepfeilten Anordnung besitzt der Lichtleiter, unabhängig davon, ob es sich um eine Bugleuchte oder eine Heckleuchte handelt, in Bezug auf die Fahrzeuglängsachse eine distale Stirnseite und eine proximale Stirnseite. Prinzipiell eignen sich beide Stirnseiten zur Lichteinkopplung. Häufig wird jedoch die näher an der Abdeckscheibe und der Fahrzeuglängsachse liegende proximale Stirnseite bevorzugt, weil dort mehr Einbauraum zur Verfügung steht und die Abwärme der Lichtquellen, die meist Leuchtdioden sind, dort weniger Problem bereitet als am distalen Ende. Diese Unterschiede zwischen dem distalen Ende und dem proximalen Ende des Lichtleiters ergeben sich dadurch, dass am distalen Ende häufig Baugruppen anderer Lichtmodule, seien es Baugruppen von Signalfunktionen erfüllenden weiteren Leuchten oder auch Baugruppen von Scheinwerferlichtfunktionen erfüllenden Lichtmodulen untergebracht werden müssen.

Aufgrund der Lichteinkopplung am proximalen Ende propagiert das in den Lichtleiter eingekoppelte Licht zunächst in Richtung zum distalen Ende des Lichtleiters, so dass sich ein großer Winkel zwischen dieser Propagationsrichtung und der gewünschten Abstrahlrichtung ergibt, denn die gewünschte Abstrahlrichtung liegt eher in der Richtung, in der das proximale Ende des Lichtleiters liegt. Mit der beschriebenen Art der Auskopplung lässt sich das Licht bei der Auskopplung häufig nicht stark genug umlenken, so dass die weniger geeignete distale Stirnseite zur Lichteinkopplung benutzt werden muss.

Es gibt noch ein weiteres per se bekanntes Auskoppelkonzept, bei dem die Auskoppelelemente auf der Lichtaustrittsfläche selbst angeordnet sind und aus dieser herausragen. Bei diesem Auskoppelkonzept wird die Auskopplung von aus dem Inneren des Lichtleiters in das Auskoppelelement eintretendem Licht durch mehrere Totalreflexionen eingeleitet, und das Licht tritt letztlich durch eine als Auskoppelfläche dienende Grenzfläche des Auskoppelelements aus. Die Auskopplung findet hier also auf der Seite statt, auf der das Auskoppelelement angeordnet ist. Wegen der mehreren internen Totalreflexionen lassen sich mit diesem Stand der Technik große Umlenkwinkel realisieren. Es ergibt sich jedoch ein Effizienzproblem, da nur das Licht ausgekoppelt werden kann, was vorher durch eine als gedachte Grenzfläche zwischen Auskoppelelement und übrigem Lichtleiter vorstellbare Basisfläche des Auskoppelelements aus dem Inneren des Lichtleiters in das Auskoppelelement eingetreten ist.

Um die ausgekoppelte Lichtmenge zu vergrößern, muss die Basisfläche relativ zu der übrigen Fläche, aus der das Auskoppelelement herausragt, vergrößert werden. Unter der aus der Forderung nach einer hohen Effizienz folgenden Bedingung, dass in das Auskoppelement eintretende Lichtstrahlen nur seitliche Grenzflächen des Auskoppelelements, nicht aber eine der Basisfläche gegenüberliegende Dachfläche treffen sollen, muss mit größer werdender Basisfläche auch die Höhe des Auskoppelelements zunehmen. Als Folge steigt das Volumen des Auskoppelelements, was wiederum spritztechnische Probleme (Verzug, lange Prozessschrittzeiten wegen langer Abkühlphasen) nach sich zieht. Hat man eine Größe eines Auskoppelelements gewählt, die spritztechnisch unproblematisch ist, kann das Verhältnis zwischen Basisfläche und der verbleibenden lichtleitenden Fläche der betreffenden Seite des Lichtleiters durch eine Verringerung der Breite dieser lichtleitenden Fläche erhöht werden. Dies führt aber zu Lichtleitern mit kleiner Einkoppelfläche, was dazu führt, dass nur ein kleinerer Teil des von der Lichtquelle ausgehenden Lichtes in den Lichtleiter eingekoppelt wird, was wiederum die Effizienz begrenzt.

Ein weiterer Nachteil des Standes der Technik ergibt sich daraus, dass die Auskoppelelemente bei dem weiteren bekannten Auskoppelkonzept auf der oberen und/oder unteren Lichtleiterseite angeordnet sind, weshalb es nicht möglich ist, eine senkrecht zur Fahrtrichtung stehende leuchtende Fläche zu erzeugen.

Vor diesem Hintergrund besteht die Aufgabe der Erfindung in der Angabe einer Beleuchtungseinrichtung der eingangs genannten Art, die eine in Bezug auf die Längsachse und Abdeckscheibe proximale Einkopplung in den Lichtleiter erlaubt und dabei große (größer als 90°) Umlenkwinkel ermöglicht, ohne dass dazu die in Verbindung mit dem zweiten Auskoppelkonzept geschilderten Nachteile in Kauf genommen werden müssen.

Diese Aufgabe wird mit den Merkmalen des Anspruchs 1 gelöst. Die Erfindung unterscheidet sich von dem Stand der Technik dadurch, dass die erste Reflexionsfläche und die zweite Reflexionsfläche dazu eingerichtet sind, Licht, dass sich innerhalb des langgestreckten Lichtleiters der Form des Lichtleiters folgend ausbreitet und dabei auf eine der beiden Reflexionsflächen fällt, zunächst so zur jeweils anderen der beiden Reflexionsflächen umzulenken, dass sich in der Summe der an den beiden Reflexionsflächen erfolgenden Umlenkungen die genannte Umlenkung zur zweiten Längsseite ergibt.

Eine bevorzugte Ausgestaltung zeichnet sich dadurch aus, dass die beiden Reflexionsflächen eine gemeinsame Kante aufweisen und ein Umkehrprisma in Form eines Dachkantenreflektors bilden.

Bevorzugt ist auch, dass die Leuchte eine Lichtquelle aufweist, die in Bezug auf die Anordnung des Lichtleiters relativ zur mittigen Fahrzeuglängsachse an einem proximalen Ende des Lichtleiters angeordnet ist.

Bevorzugt ist auch, dass die Lichtquelle eine Halbleiterlichtquelle ist, die eine oder mehrere Licht emittierende Dioden aufweist, wobei die Dioden bei der Alternative, bei der mehrere Dioden vorhanden sind, entweder gleichfarbiges Licht oder Licht verschiedener Signalfarben emittieren.

Ferner ist bevorzugt, dass die beiden Reflexionsflächen in einem 90°-Winkel aufeinanderstoßen.

Bevorzugt ist auch, dass das Umlenkprisma die Form eines Porro-Prismas, also die Form eines Prismas mit rechtwinkliger und gleichschenkliger Basisfläche, aufweist.

Bevorzugt ist auch, dass die gemeinsame Kante in Bezug auf eine Breite b der ersten Längsseite, aus der das Umlenkelement herausragt, in der Mitte liegt.

Ferner ist bevorzugt, dass die beiden Reflexionsflächen symmetrisch sind zu einer Symmetrieebene, in der die gemeinsame Kante liegt.

Bevorzugt ist auch, dass die Reflexionsflächen entgegen der Hauptausbreitungsrichtung des Lichtes im Lichtleiter geneigt angeordnet sind.

Ferner ist bevorzugt, dass die Breite des Umlenkelements 36 außerhalb des Umlenkprismas 38 der Breite b des Lichtleiterabschnitts entspricht, aus dem das Umlenkelement herausragt.

Bevorzugt ist auch, dass eine Deckfläche 50 des Umlenkelements, die zwischen der dritten Längsseite 26 und der vierten Längsseite 28 des Lichtleiters sowie zwischen der Spitze 52 des Umlenkprismas und dem in dem ersten Abstand vor der Lichteintrittsfläche liegenden Übergang 54 von der ersten Lichtleiterseite in das Umlenkelement liegt, eine ebene Fläche ist.

Eine weitere bevorzugte Ausgestaltung zeichnet sich durch in die Lichtaustrittsfläche des Lichtleiters eingeformte lichtstreuende und/oder lichtsammelnde Umlenkstrukturen aus.

Bevorzugt ist auch, dass der Lichtleiter ein flächiger Lichtleiter ist, der mehrere Stellen zur Einkopplung von Licht aufweist.

Ferner ist bevorzugt, dass ein zwischen den gedanklich auf eine Längsseite des Lichtleiters aufgesetzten Umlenkelementen und der gegenüberliegenden Längsseite liegender Querschnitt des Lichtleiters mit zunehmendem Abstand vom Ort der Lichteinkopplung immer kleiner wird.

Bevorzugt ist auch, dass die Größe der Umlenkelemente mit zunehmender Entfernung von der Lichteinkopplung anwächst.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

### Zeichnungen

Ein Ausführungsbeispiel der Erfindung ist in der Zeichnung dargestellt und wird zusammen mit weiteren Ausführungsbeispielen in der nachfolgenden Beschreibung näher erläutert. Es zeigen:
Figur 1 eine Beleuchtungseinrichtung im eingebauten Zustand, wobei Fig. 1a die Beleuchtungseinrichtung mit ihrem Umfeld und Fig. 1b Einzelheiten der Beleuchtungseinrichtung zeigt;
Figur 2 eine Anordnung aus einem stabförmigen Lichtleiter und einer Lichtquelle;
Figur 3 einen Lichtleiter der in der Figur 2 dargestellten Art von oben;
Figur 4 den Lichtleiter aus der Figur 3 von links;
Figur 5 ein Prisma, das einen unter 45° auf die erste Reflexionsfläche treffenden Strahl umlenkt;
Figur 6 eine Ausgestaltung, die, abgesehen von einer durch Umlenkelemente erzeugten Oberflächenstruktur weitgehend eben ist;
Figur 7 eine erste Ansicht einer Ausgestaltung mit stufenförmig versetzt angeordneten Abschnitten eines Lichtleiters;
Figur 8 den Gegenstand der Figur 7 aus einem anderen Blickwinkel;
Figur 9 eine durch eine Krümmung oder Wölbung der genannten Reflexionsfläche beeinflussbare Winkelverteilung aus dem Lichtleiter austretender Strahlen;
Figur 10 ein Umlenkprisma mit einer gekrümmten Reflexionsfläche; und
Figur 11 einen Lichtleiter, der so ausgestaltet ist, dass sein unterhalb der Umlenkelemente liegender Querschnitt mit zunehmendem Abstand vom Ort der Lichteinkopplung immer kleiner wird.

Gleiche Bezugszeichen in verschiedenen Figuren bezeichnen dabei jeweils gleiche oder zumindest ihrer Funktion nach vergleichbare Elemente.

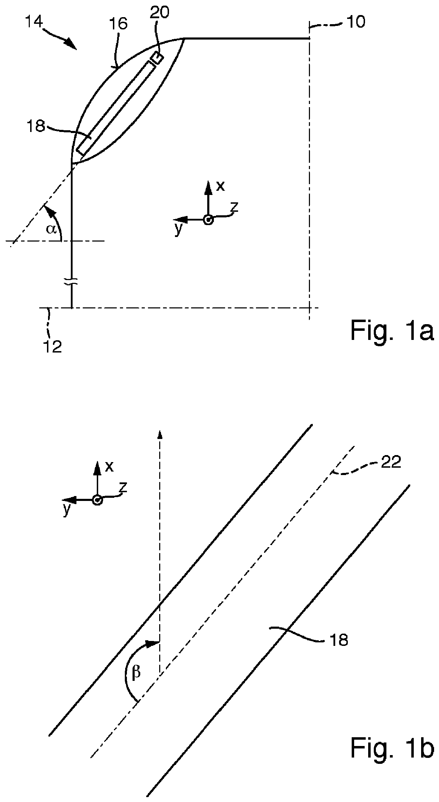

Figur 1 zeigt eine Draufsicht auf einen Fahrzeugbug. Die x-Richtung entspricht der Fahrtrichtung, in der auch die mittige Längsachse 10 des Fahrzeugs liegt. Die y-Richtung entspricht einer horizontal und parallel zu einer Querachse 12 des Fahrzeugs liegenden Richtung, und die z-Richtung entspricht einer vertikal nach oben weisenden und parallel zur Hochachse des Fahrzeugs liegenden Richtung. Von der Beleuchtungseinrichtung 14, bei der es sich im dargestellten Fall um einen linken Frontscheinwerfer handelt, ist im Wesentlichen eine Abdeckscheibe 16 mit einem dahinter liegenden Lichtleiter 18 und einer Licht in den Lichtleiter einspeisenden Lichtquelle 20 erkennbar. Die Lichtquelle ist in Bezug auf die Anordnung des Lichtleiters relativ zur mittigen Fahrzeuglängsachse an einem proximalen Ende des Lichtleiters angeordnet.

Der Lichtleiter schließt mit der negativen y-Richtung einen ersten Pfeilungswinkel α ein. Zusammen mit einer zur Längsachse 10 spiegelbildlichen Anordnung eines von seiner Funktion her dem Lichtleiter 18 entsprechenden Lichtleiters eines nicht dargestellten rechten Frontscheinwerfers ergibt sich eine pfeilförmig in Vorwärtsfahrtrichtung weisende Anordnung der genannten Lichtleiter. Bei einer Ausgestaltung der Beleuchtungseinrichtung als Heckleuchte ergibt sich eine pfeilförmig gegen die Vorwärtsfahrtrichtung weisende Anordnung dieser Lichtleiter. In beiden Fällen weist die pfeilförmige Anordnung in eine zur Längsachse parallele Lichtabstrahlrichtung der Beleuchtungseinrichtung.

Der Lichtleiter 18 bildet zusammen mit der Lichtquelle ein Lichtmodul, das eine Lichtfunktion erfüllt, indem es zum Beispiel Licht für eine regelkonforme Blinklichtverteilung oder eine regelkonforme Tagfahrlichtverteilung erzeugt. Die Beleuchtungseinrichtung kann neben der dargestellten Anordnung aus Lichtleiter und Lichtquelle noch weitere Lichtmodule aufweisen, die andere Lichtfunktionen erfüllen, seien es Signallichtfunktionen oder Scheinwerferlichtfunktionen wie Abblendlicht oder Fernlicht. Bei der Beleuchtungseinrichtung handelt es sich in einer weiteren Ausgestaltung um eine Heckleuchte, die ebenfalls weitere Lichtmodule aufweisen kann.

Fig. 1b zeigt einen Umlenkwinkel β, um den das im Lichtleiter 18 propagierende Licht 22 bei der Anordnung von Lichtquelle 20 und Lichtleiter 18 gemäß Figur 1 umgelenkt werden muss, damit es eine gewünschte Hauptabstrahlrichtung besitzt, die hier parallel zur Fahrzeuglängsachse und damit hier parallel zur x-Achse liegt. Der Umlenkwinkel β ist hier deutlich größer als 90°.

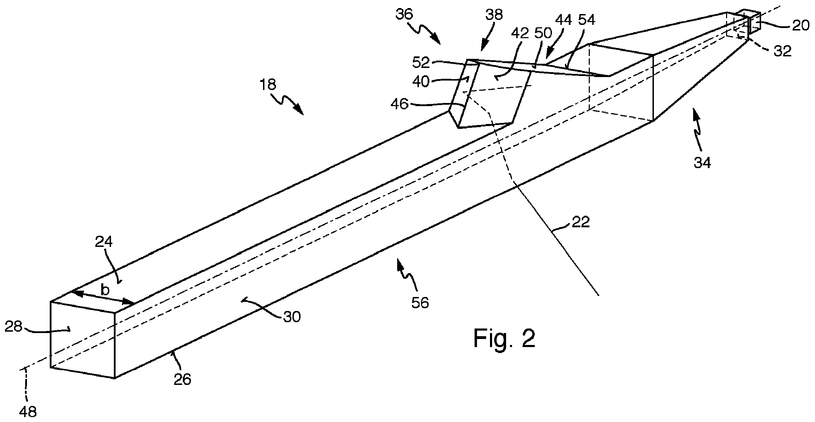

Fig. 2 zeigt eine Anordnung aus einem hier stabförmigen Lichtleiter und einer Lichtquelle. Die Lichtquelle ist an einem Ende des stabförmigen Lichtleiters angeordnet. Unter einem stabförmigen Lichtleiter wird hier ein Lichtleiter verstanden, dessen Länge ein Mehrfaches seiner Breite und seiner Höhe beträgt.

Der Lichtleiter besitzt eine erste Längsseite 24 und eine zweite Längsseite 26, die der ersten Längsseite gegenüberliegt und die von der ersten Längsseite durch eine dritte Längsseite 28 und eine der dritten Längsseite gegenüberliegende vierte Längsseite 30 getrennt ist.

Die Lichtquelle ist so angeordnet, dass von ihr ausgehendes Licht 22 über eine an dem einen Ende des Lichtleiters angeordnete Lichteintrittsfläche 32 in den Lichtleiter eintritt. Die Lichtquelle 20 ist bevorzugt eine Halbleiterlichtquelle, insbesondere eine Leuchtdiode oder eine Anordnung mehrerer Leuchtdioden. Die Halbleiterlichtquelle weist bevorzugt eine ebene Lichtaustrittsfläche auf, so dass sie einen Halbraumstrahler bildet. Der Öffnungswinkel des von dieser Lichtaustrittsfläche ausgehenden Lichtbündels beträgt längs einer durch die Bündelmitte laufenden Achse ca. 180° und wird beim Lichteintritt aus der Luft in das optische dichtere Lichtleitermaterial durch Brechung verringert.

Das Licht breitet sich von der Lichteintrittsfläche 32 ausgehend im Lichtleiter aus. Dabei folgt die Hauptausbreitungsrichtung der Form des Lichtleiters aufgrund von an den genannten Längsseiten des Lichtleiters auftretenden internen Totalreflexionen. Um diese Hauptausbreitungsrichtung des Lichtes herum breitet sich das Licht dabei in einem Bündel aus, dessen Öffnungswinkel durch den Öffnungswinkel des in den Lichtleiter eintretenden Lichtbündels und gegebenenfalls durch eine den Öffnungswinkel beeinflussende Geometrie des Lichtleiters festgelegt wird.

In der Figur 2 ist eine solche Geometrie durch einen ersten Lichtleiterabschnitt 34 verwirklicht, dessen quer zur Hauptausbreitungsrichtung des Lichtes liegender Querschnitt mit zunehmender Entfernung von der Lichteintrittsfläche kontinuierlich größer wird. Dadurch verringert sich der Öffnungswinkel des Lichtbündels als Folge des Umstandes, dass der Winkel des reflektierten Strahles zu einer Mittelfaser oder Führungslinie des Abschnitts aufgrund des Reflexionsgesetzes bei dieser Geometrie immer kleiner ist als der Winkel des einfallenden Strahles zu dieser Mittelfaser. Statt des Abschnitts 34 können auch andere Geometrien verwendet werden, die zu kleinen Winkeln zwischen Mittelfaser und Strahlen führen, zum Beispiel eine Kugelkalotte.

Der Lichtleiter besitzt ein Umlenkelement 36. Das Umlenkelement ragt aus einer Längsseite, hier der Längsseite 24 des Lichtleiters heraus. Das Umlenkelement weist ein Umlenkprisma 38 und einen das Umlenkprisma mit dem übrigen Volumen des Lichtleiters 18 einstückig und stoffschlüssig verbindenden Anstiegsbereich 44 auf. Das Umlenkprisma 38 weist eine erste Reflexionsfläche 40 und eine zweite Reflexionsfläche 42 auf. Die beiden Reflexionsflächen weisen eine gemeinsame Kante 46 auf. Die gemeinsame Kante trennt die beiden Reflexionsflächen so voneinander, wie ein Dachfirst die zwei schrägen Dachflächen eines einfachen, einen Dreiecksquerschnitt aufweisenden Giebels eines Hauses voneinander trennt oder wie eine Würfelkante die zwei Flächen eines Würfels voneinander trennt. Die Kante 46 wird daher auch als Dachkante bezeichnet.

In einem bevorzugten Ausführungsbeispiel stoßen die beiden Reflexionsflächen in einem 90°-Winkel aufeinander, wie dies bei zwei Seiten eines sechs gleiche Flächen aufweisenden Würfels der Fall ist. Kleine Abweichungen vom 90°-Winkel sind möglich, wobei die Gradzahl, die noch als kleine Abweichung gilt, vom Parallelisierungsgrad der Strahlen abhängt. Bevorzugt ist, dass diese Gradzahl kleiner als 3° ist, so dass der Winkel, in dem die beiden Reflexionsflächen aufeinanderstoßen, zwischen 87° und 93° liegt. Bevorzugt ist auch, dass das Umkehrprisma die Form eines Porro-Prismas, also die Form eines Prismas mit rechtwinkliger und gleichschenkliger Basisfläche aufweist. Das Umkehrprisma ist der zwischen den beiden Reflexionsflächen liegende Teil des Volumens des Umlenkelements. Das dazu komplementäre Volumen des Umlenkelements bildet den Anstiegsbereich 44 und hat die Funktion, einen Teil des im Lichtleiter propagierenden Lichtes in das Umlenkprisma zu leiten.

In Bezug auf die Breite b der ersten Längsseite 24, aus der das Umlenkelement herausragt, liegt die gemeinsame Kante bevorzugt in der Mitte der ersten Längsseite und damit in der Mitte zwischen der dritten Längsseite und der vierten Längsseite. Die beiden Reflexionsflächen sind bevorzugt symmetrisch zu einer Symmetrieebene, in der die gemeinsame Kante liegt. Darüber hinaus sind die beiden Reflexionsflächen bevorzugt auch in Bezug auf eine Führungslinie 48 symmetrisch, die sich als Bahn der senkrecht zur Hauptausbreitungsrichtung des Lichtes liegenden Querschnitte des Lichtleiters ergibt. Die eingezeichnete Führungslinie 48 ist zu dieser Hauptausbreitungsrichtung parallel, wobei die Hauptausbreitungsrichtung von der Lichteintrittsfläche 32 weg in das Innere des Lichtleiters weist.

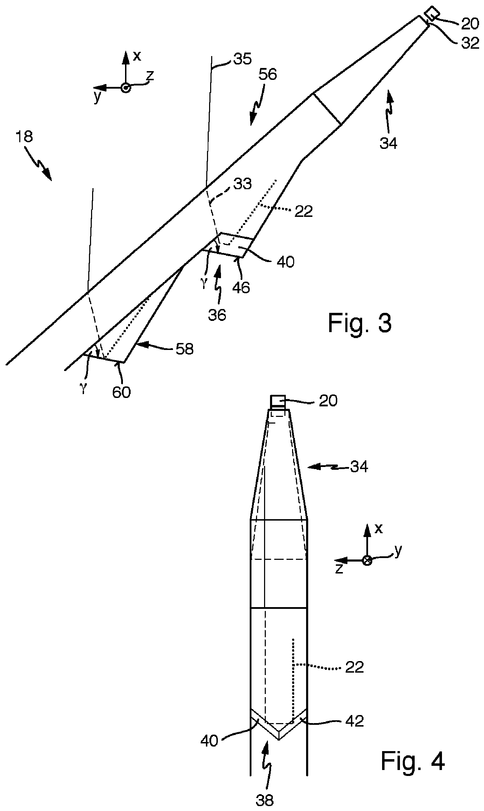

Die Reflexionsflächen sind entgegen der Hauptausbreitungsrichtung des Lichtes im Lichtleiter geneigt angeordnet. Die Neigung ist so, dass die Hauptausbreitungsrichtung des Lichtes im Lichtleiter mit der von der Hauptausbreitungsrichtung weg weisenden gemeinsamen Kante der Reflexionsflächen einen Winkel einschließt, der größer als 90° ist. In der Figur 3 ist dieser Winkel der Winkel (180°-γ).

Außerhalb des Umlenkprismas 38 entspricht die Breite des Umlenkelements 36 bevorzugt der Breite b des Lichtleiterabschnitts, aus dem das Umlenkelement herausragt.

Ausgehend von einem ersten Abstand zur Lichteintrittsfläche des Lichtleiters ragt das Umlenkelement mit weiter zunehmendem Abstand von der Lichteintrittsfläche immer weiter aus der ohne Umlenkelemente gedachten ersten Lichtleiterseite heraus, wobei die Höhe, mit der das Umlenkelement aus der ersten Lichtleiterseite herausragt, mit zunehmendem Abstand kontinuierlich zunimmt. Eine Deckfläche 50 des Umlenkelements, die zwischen der dritten Längsseite 26 und der vierten Längsseite 28 des Lichtleiters sowie zwischen der Spitze 52 des Umlenkprismas und dem in dem ersten Abstand vor der Lichteintrittsfläche liegenden Übergang 54 von der ersten Lichtleiterseite in das Umlenkelement liegt, ist bevorzugt als ebene Fläche verwirklicht.

Nachdem das Licht den ersten Lichtleiterabschnitt 34 passiert hat, tritt es in einen zweiten Lichtleiterabschnitt 56 ein, der das beschriebene Umlenkelement aufweist. Bevorzugt sind mehrere solcher Umlenkelemente hintereinander angeordnet. In der Fig. 2 ist lediglich aus Gründen der Übersichtlichkeit nur ein solches Umlenkelement dargestellt. In den Umlenkelementen erfahren die Lichtstrahlen eine zweimalige interne Totalreflexion an den Reflexionsflächen und ändern dabei ihre Richtung so, dass sie von der Längsseite, aus der das Umlenkelement herausragt, zu der dieser Längsseite gegenüberliegenden Längsseite umgelenkt werden. Im dargestellten Fall ist dies die zweite Längsseite 26. Das Licht trifft dort dann so steil auf, dass es dort keine interne Totalreflexion erfährt und stattdessen gebrochen wird und aus der damit als Austrittsfläche dienenden Längsseite austritt. Der Lichtleiter ist durch seine Anordnung der Reflexionsfläche bevorzugt dazu eingerichtet, das Licht in Richtungen auszukoppeln, in denen das ausgekoppelte Licht die Anforderungen an eine regelkonforme Lichtverteilung erfüllt. Dies wird in einer Ausgestaltung durch eine entsprechende Formgebung der Lichtaustrittsfläche erzielt. Eine solche Formgebung ergibt sich zum Beispiel durch in die Lichtaustrittsfläche eingeformte lichtstreuende und/oder lichtsammelnde Umlenkstrukturen mit Kissenform oder Zylinderflächenform.

Figur 3 zeigt einen Lichtleiter 18 der in der Figur 2 dargestellten Art von oben und in einer Anordnung, die der Anordnung des Lichtleiters 18 aus der Fig. 1 entspricht. Es handelt sich bei dem dargestellten Beispiel also um einen Lichtleiter eines linken Frontscheinwerfers, der so angeordnet ist, wie es in der Figur 1 dargestellt ist. Ein aus dem Inneren des Lichtleiters in das Umlenkelement 36 einfallender Lichtstrahl ist als punktierte Linie dargestellt. Nach der ersten Reflexion ist dieser Strahl gestrichelt dargestellt, und nach der Auskopplung aus dem Umlenkelement ist dieser Strahl als durchgezogene Linie dargestellt.

Figur 4 zeigt einen Teil des Lichtleiters 18 aus der Figur 3 von links. Die Blickrichtung entspricht also der negativen y-Richtung: Man erkennt, dass die zweimalige Reflexion an den Reflexionsflächen 42, 40 des gedanklich schräg auf den übrigen Lichtleiterkörper aufgesetzten Umlenk-Prismas erfolgt. Der Grad der Schrägheit, mit dem das Prisma in dieser Ausgestaltung verwendet wird, ist in der Figur 3 veranschaulicht und wird im Folgenden erläutert.

Figur 3 zeigt neben dem Merkmale der Erfindung aufweisenden Umlenkprisma 36 noch ein weiteres Umlenkelement 58. Dieses Umlenkelement 58 besitzt an Stelle der beiden Reflexionsflächen des Umlenkelements 36, die einen Dachkantenreflektor formen, eine durchgehend ebene Reflexionsfläche 60. Um mit einer solchen Reflexionsfläche eine für die beschriebene Einbaulage des Lichtleiters und Anordnung der Lichtquelle ausreichend große Umlenkung zu erzielen, muss die Fläche 60 verspiegelt sein, weil bei einem entsprechend kleinen Einfallswinkel zum Lot keine interne Totalreflexion und stattdessen eine unerwünschte Lichtauskopplung auftreten würde. Mit anderen Worten: Wird auf die prismatische Struktur verzichtet und lediglich ein Quader aufgesetzt, muss die Reflexionsfläche 60 verspiegelt werden, damit der Winkel, mit dem der Stahl auf diese Fläche auftrifft, nicht zu Auskopplung führt. Verspiegelungen durch metallische Beschichtungen sind aufwändig herzustellen und daher teuer. Außerdem treten an verspiegelten Flächen größere Verluste als an intern total reflektierenden Flächen auf.

Der Anstellwinkel γ dieser Reflexionsfläche 60, unter dem hier der Winkel zwischen dieser Fläche und einer gedachten Basisfläche des gedanklich aufgesetzten Umlenkelements 58 verstanden wird, ergibt sich für die verspiegelte Reflexionsfläche unmittelbar aus dem Reflexionsgesetz für die Reflexion an der Fläche 60, dem Brechungsgesetz für den Lichtaustritt aus der dem Umlenkelement gegenüberliegenden Längsseite, und dem Einfallswinkel des Lichts auf die Reflexionsfläche sowie der für den austretenden Strahl gewünschten Richtung. Der Einfallswinkel des aus dem Inneren des Lichtleiters einfallenden Strahls ist gleich dem Ausfallswinkel des reflektierten Strahles im Material. Die beim Austritt aus dem Material erfolgende Richtungsänderung ergibt sich aus dem Brechungsgesetz.

Um mit dem Merkmale der Erfindung aufweisenden Umlenkprisma 36 die gleichen Lichtrichtungen in der Luft zu erzielen, muss die gemeinsame Kante 46 gegenüber der Führungslinie des Lichtleiters um den gleichen Anstellwinkel γ geneigt sein wie die ebene Reflexionsfläche 60 des weiteren Umlenkelements 58.

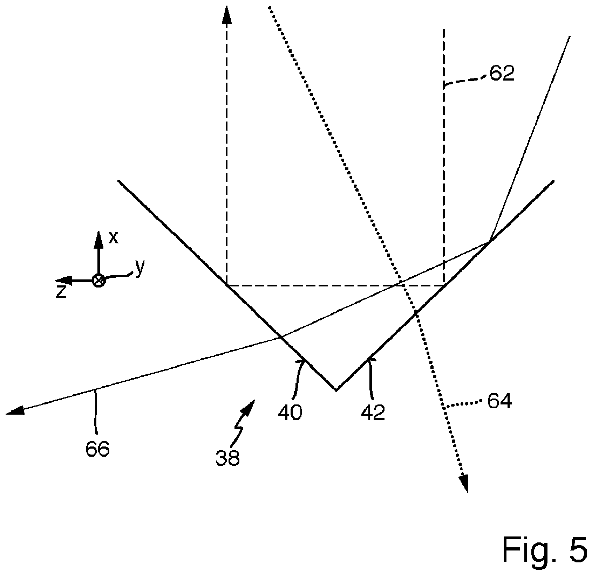

Figur 5 zeigt ein Umlenkprisma 38, das einen unter 45° auf die Reflexionsfläche 42 treffenden Strahl 62 zeigt, der in der Figur 5 gestrichelt dargestellt ist. Dieser Strahl wird an der zuerst getroffenen Reflexionsfläche 42 zuerst um 90° umgelenkt und anschließend an der weiteren Reflexionsfläche 40 ebenfalls mit einer Richtungsänderung um 90° reflektiert, so dass dieser Strahl insgesamt eine Richtungsänderung um 180° erfährt. Die Umlenkung wird daher auf zwei Reflexionen verteilt, wobei vorteilhafterweise bei jeder der beiden Reflexionen die Bedingungen für eine interne Totalreflexion erfüllt sind.

Wenn Lichtstrahlen unter einem Winkel auf die erste Reflexionsfläche treffen, der zum Lot hin deutlich kleiner ist als 45°, kann dieser Strahl unter Umständen in unerwünschter Weise direkt aus der ersten Reflexionsfläche austreten. Dies wird in der Figur 5 durch den punktiert dargestellten Strahl 64 repräsentiert.

Wenn Lichtstrahlen unter einem Winkel auf die erste Reflexionsfläche treffen, der zum Lot hin deutlich größer ist als 45°, kann dieser Strahl unter Umständen nach einer internen Totalreflexion an der ersten Reflexionsfläche in unerwünschter Weise aus der zweiten Reflexionsfläche austreten. Dies wird in der Figur 5 durch den durchgezogen dargestellten Strahl 66 repräsentiert.

Die maximale Abweichung des einfallenden Strahls vom 45°-Winkel zum Lot, die noch zur erwünschten Strahlumkehr führt, ist vom Brechungsindex des von Luft umgebenen Lichtleitermaterials abhängig und beträgt in der Papierebene (90° - µ)/2, wobei µ der Grenzwinkel der internen Totalreflexion für das betreffende Material ist. Für PMMA (Polymethylmethacrylat) ist µ gleich 42°, so dass sich eine maximale Abweichung von +/- 3° ergibt. Für PC (Polycarbonat) ist µ gleich 39°, so dass sich als maximale Abweichung ein Wert von +/- 6° ergibt.

Wenn sich das Prisma 38 in Figur 5 senkrecht zur Papierebene erstreckt und die Strahlen um einen immer stärker anwachsenden Winkel aus der Papierebene heraus gedreht werden, wird die erlaubte maximale Abweichung, bei der noch kein Licht unerwünscht austritt, ebenfalls immer größer. Ein solcher Lichteinfall ergibt sich, wenn man das Licht wie in der Figur 3 aus einem gepfeilten Lichtleiter (dort 45°) in Fahrtrichtung auskoppelt. Der in der Figur 3 punktiert dargestellte, ankommende Strahl 22 muss mit dem zweifach gespiegelten und in der Figur 3 gestrichelt dargestellten Strahl 33 einen Winkel von 33° bilden, sodass der mit einer durch Brechung verursachten Richtungsänderung ausgetretene Strahl 35 in die Fahrtrichtung zeigt. Das bedeutet, dass der Strahl um 33°/2 aus der Papierebene herausgedreht verläuft. Der Winkel, um den aus der Papierebene herausgedreht wird, wächst an, wenn die Pfeilung des Lichtleiters verringert wird.

Zusammenfassend lässt sich also sagen, dass das Licht im Lichtleiter dem Zustand einer vollständigen Parallelität seiner Lichtstrahlen umso näher kommen muss, je stärker der Lichtleiter gepfeilt angeordnet ist. Für jede Pfeilung gibt es einen Grenzwinkel. Weist ein ankommendes Lichtbündel einen Öffnungswinkel auf, der größer als dieser Grenzwinkel ist, gehen die Anteile des Bündels, deren Winkel größer als der Grenzwinkel sind, verloren. Will man einen effizienten Lichtleiter bauen, der Lichtstrahlen mit einem Prisma sehr stark umlenkt, sollte bevorzugt bereits bei der Lichteinkopplung in den Lichtleiter erreicht werden, dass die Bündelöffnung kleiner als der genannte Grenzwinkel ist.

Die Erfindung ist nicht auf Leuchten mit geradlinig verlaufenden stabförmigen Lichtleitern beschränkt, sondern auch bei Lichtleitern verwendbar, die entlang einer gekrümmten Führungslinie gekrümmt verlaufen. Jedem Längenelement lässt sich eine Pfeilung zuordnen, für welche dann die oben stehenden Erläuterungen gelten.

Die Breite der Umlenkelemente entspricht bevorzugt der Breite eines Lichtleiters oder Teils eines Lichtleiters, der von einer Einkopplung her mit Licht gespeist wird. Die Erfindung ist aber nicht auf diese speziellen Lichtleiter beschränkt, sondern sie kann auch mit Lichtleitern verwirklicht werden, deren Breite größer ist als die Breite der Umlenkelemente. Über der Lichtleiterbreite können auch mehrere Auskoppelelemente angeordnet sein.

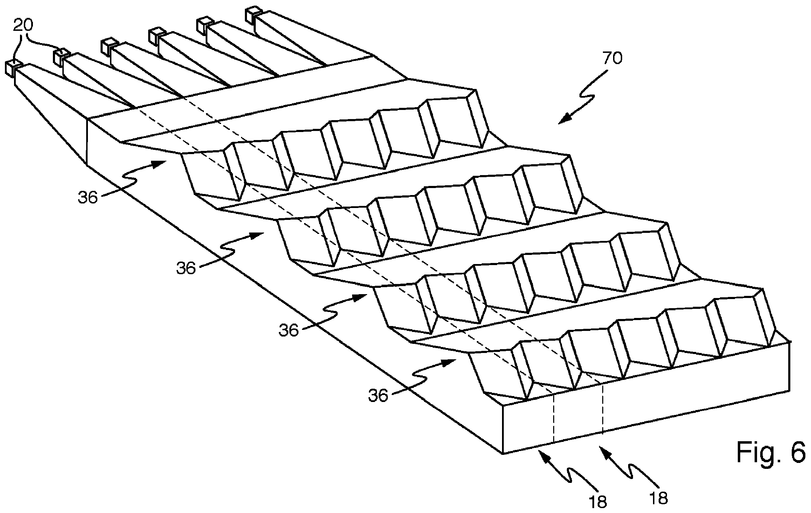

Figur 6 zeigt eine Ausgestaltung mit einem flächigen Lichtleiter 70, den man sich durch Aneinanderfügen mehrerer Lichtleiter 18 der in der Figur 2 gezeigten Art entstanden denken kann, wobei hier aber jeweils mehrere Umlenkelemente 36 längs jedes Lichtleiters 18 hintereinander angeordnet sind. Insgesamt ergibt sich so eine eher flächige als stabförmige Lichtleiterform, bei der die einzelnen Umlenkelemente matrixartig angeordnet sind.

Die in der Figur 6 dargestellte Ausgestaltung ist, abgesehen von der durch die zahlreichen, matrixartig angeordneten Umlenkelemente erzeugten Oberflächenstruktur, weitgehend eben. Analog zu den Ausgestaltungen mit stabförmigen Lichtleitern ist die Erfindung nicht auf solche ebenen Ausgestaltungen beschränkt, sondern kann auch mit gewölbt-flächigen Lichtleitern verwirklicht werden. Auch für diese gilt, dass ihnen punktweise Pfeilungswinkel zugeordnet werden können und dass die obigen Erläuterungen punktweise auch auf solche Ausgestaltungen anwendbar sind.

Eine bevorzugte Ausgestaltung sieht vor, dass in eine Platte der in der Figur 6 dargestellten Art, die mehrere Stellen zur Einkopplung von Licht vorsieht, Licht verschiedenfarbiger Leuchtdioden eingekoppelt wird, um mit ein und derselben Lichtleiteranordnung mehrere Lichtfunktionen wie Blinklicht (gelb) und Tagfahrlicht (weiß) erfüllen zu können.

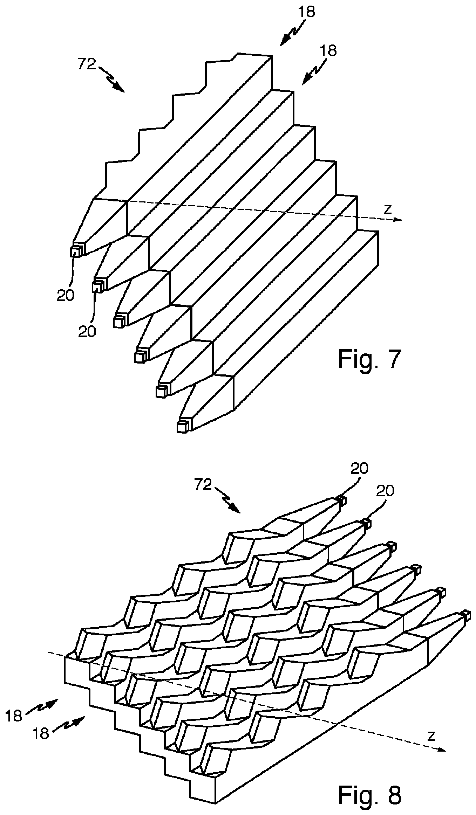

Die Figuren 7 und 8 zeigen verschiedene Ansichten einer Ausgestaltung mit stufenförmig versetzt angeordneten Abschnitten, wobei jeder einzelne Abschnitt einem stabförmigen Lichtleiter 18 des in der Figur 2 dargestellten Typs entspricht. Die Figuren 7 und 8 zeigen damit insbesondere Ausgestaltungen, mit denen sich Lichtaustrittsflächen verwirklichen lassen, die eine Neigung gegenüber der z-Richtung aufweisen.

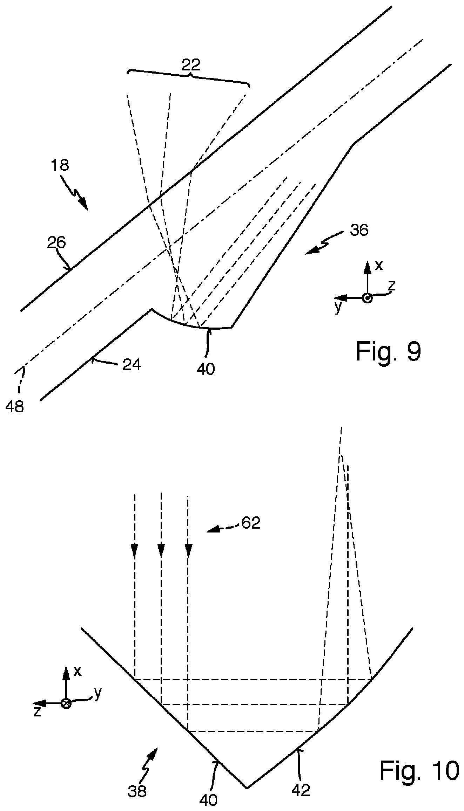

Figur 9 zeigt einen Schnitt durch einen Lichtleiter 18, wobei die Schnittebene einer Mittelfaser oder Führungslinie 48 des Lichtleiters folgt und parallel zu einander gegenüberliegenden Längsseiten des Lichtleiters liegt, zwischen denen die Seite 24 liegt, aus der das Umlenkelement herausragt. Der Gegenstand der Fig. 9 unterscheidet sich von den bis hier betrachteten Gegenständen durch eine konvexe Krümmung derjenigen Reflexionsfläche 40 und/oder 42, die das Licht steil zur Lichtaustrittsseite 26 des Lichtleiters umlenkt. Die Figur 9 veranschaulicht insbesondere, dass die Winkelverteilung der aus dem Lichtleiter 18 austretenden Strahlen durch die Krümmung oder Wölbung der genannten Reflexionsfläche beeinflussbar ist.

Figur 10 zeigt den Gegenstand der Fig. 9 aus einer anderen Perspektive, bei der die Blickrichtung wie bereits bei der Figur 5 der negativen y-Richtung entspricht. Figur 10 zeigt ein Umlenkprisma 38, das unter 45° auf die Reflexionsfläche 42 treffende Strahlen 22 zeigt. Diese Strahlen werden an der zuerst getroffenen Reflexionsfläche, hier der Reflexionsfläche 40, zuerst um 90° umgelenkt und anschließend an der weiteren Reflexionsfläche 42 mit einer Richtungsänderung reflektiert, die um 90° herum streut, weil die zweite Reflexionsfläche, hier die Reflexionsfläche 42, für die einfallenden Strahlen gekrümmt ist. Diese Ausgestaltungen verdeutlichen, dass gezielte Umlenkungen des Lichtes nicht nur durch Einformung von lichtumlenkenden Strukturen in die Lichtaustrittsfläche verwirklicht sein können. Alternativ oder ergänzend erfolgt eine solche gezielte Lichtumlenkung durch eine gekrümmte Form von wenigstens einer der beiden Reflexionsflächen 40, 42 des Umlenkprismas.

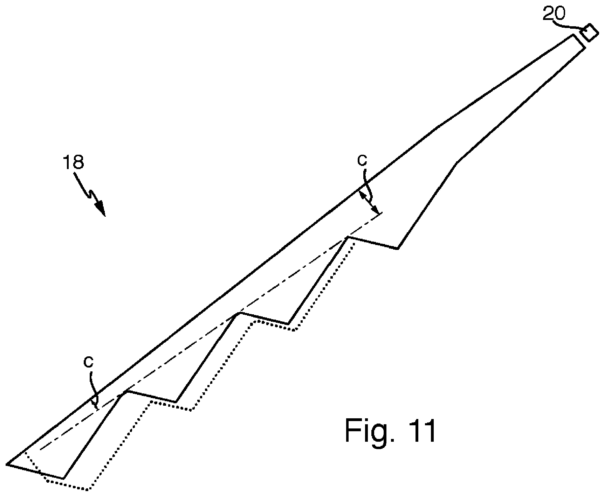

Figur 11 zeigt eine bevorzugte Ausgestaltung eines Lichtleiters 18, der so ausgestaltet ist, dass sein zwischen den gedanklich auf eine Längsseite des Lichtleiters aufgesetzten Umlenkelementen und der gegenüberliegenden Längsseite liegender Querschnitt mit zunehmendem Abstand vom Ort der Lichteinkopplung immer kleiner wird. Die punktierte Linie in der Figur 11 zeigt zum Vergleich eine Lichtleiterform, die diese Querschnittsverkleinerung nicht aufweist, während die durchgezogen dargestellte Form die bevorzugte Ausgestaltung repräsentiert. Die Querschnittsverringerung zeigt sich an der mit zunehmendem Abstand von der Lichtquelle 20 immer kleiner werdenden Höhe c dieser Querschnitte.

Bei der genannten bevorzugten Ausgestaltung ist die Wahrscheinlichkeit verringert, dass Licht, das der Lichtquelle gegenüberliegende Ende des Lichtleiters erreicht, ohne vorher ausgekoppelt zu werden. Man kann die Effizienz des Lichtleiters als Verhältnis der in gewünschter Weise ausgekoppelten Lichtmenge zur von der Lichtquelle eingespeisten Lichtmenge definieren. Dadurch, dass die Ausgestaltung, welche die beschriebene Querschnittsverengung aufweist, vergleichsweise weniger Licht an das der Einkopplung gegenüberliegende Ende des Lichtleiters gelangen lässt, weist diese Ausgestaltung eine vergleichsweise entsprechend hohe Effizienz auf.

Eine weitere bevorzugte Ausgestaltung zeichnet sich dadurch aus, dass die Umlenkelemente abweichend von ihrer Darstellung in den Figuren nicht identisch sind. Bevorzugt ist insbesondere, dass ihre Größe mit zunehmender Entfernung von der Lichteinkopplung anwächst. Dadurch wird der unerwünschte Effekt verringert oder kompensiert, dass mit zunehmendem Abstand vom Ort der Lichteinkopplung immer weniger Licht zur Auskopplung bereit steht. Die Vergrößerung der Umlenkelemente vergrößert die Auskoppelwahrscheinlichkeit, so dass die Abnahme der zur Auskopplung zur Verfügung stehenden Lichtmenge in dem die ausgekoppelte Lichtmenge bestimmenden Produkt aus zur Auskopplung zur Verfügung stehender Lichtmenge und Auskoppelwahrscheinlichkeit zumindest teilweise kompensiert wird. Dies trägt zu einem erwünscht homogen hellen Erscheinungsbild der Lichtaustrittsfläche über der Länge des Lichtleiters bei.

Eine weitere Ausgestaltung zeichnet sich dadurch aus, dass der Lichtleiter zusätzlich zu den vorstehend beschriebenen Umlenkelementen noch weitere Auskoppelelemente aufweist, die andere Auskoppelkonzepte verwirklichen. Beispiele solcher Auskoppelelemente sind die eingangs in Verbindung mit der Darstellung des Standes der Technik beschriebenen Auskoppelelemente.

## Patentansprüche

1. Kraftfahrzeugleuchte (14) mit einem Lichtleiter (18), der eine erste Längsseite (24) und eine der ersten Längsseite (24) gegenüberliegende zweite Längsseite (26) aufweist, und der an seiner ersten Längsseite (24) angeordnete Umlenkelemente (36) aufweist, die dazu eingerichtet sind, aus dem Inneren des Lichtleiters (18) auf sie einfallendes Licht so zur zweiten Längsseite (26) umzulenken, dass das umgelenkte Licht dort so steil auftrifft, dass es über die zweite Längsseite (26) aus dem Lichtleiter (18) austritt, wobei die Umlenkelemente (36) ein Umlenkprisma (38) mit einer ersten Reflexionsfläche (40) und einer zweiten Reflexionsfläche (42) aufweisen, die dazu eingerichtet sind, dass sie Licht, dass sich innerhalb des langgestreckten Lichtleiters (18) der Form des Lichtleiters (18) folgend ausbreitet und dabei auf eine der beiden Reflexionsflächen (40, 42) fällt, zunächst so zur jeweils anderen der beiden Reflexionsflächen (40, 42) umlenken dass sich in der Summe der an den beiden Reflexionsflächen (40, 42) erfolgenden Umlenkungen die genannte Umlenkung zur zweiten Längsseite (26) ergibt.

2. Leuchte (14) nach Anspruch 1, **dadurch gekennzeichnet, dass** die beiden Reflexionsflächen (40, 42) eine gemeinsame Kante (46) aufweisen und ein Umkehrprisma in Form eines Dachkantenreflektors bilden.

3. Leuchte (14) nach einem der vorhergehenden Ansprüche, **dadurch gekennzeichnet, dass** sie eine Lichtquelle (20) aufweist, die in Bezug auf die Anordnung des Lichtleiters (18) relativ zu einer mittigen Fahrzeuglängsachse (10), wenn die Fahrzeugleuchte (14) am Fahrzeug befestigt ist, an einem proximalen Ende des Lichtleiters angeordnet ist.

4. Leuchte (14) nach Anspruch 3, **dadurch gekennzeichnet, dass** die Lichtquelle (20) eine Halbleiterlichtquelle ist, die eine oder mehrere Licht emittierende Dioden aufweist, wobei die Dioden bei der Alternative, bei der mehrere Dioden vorhanden sind, entweder gleichfarbiges Licht oder Licht verschiedener Signalfarben emittieren.

5. Leuchte (14) nach einem der vorhergehenden Ansprüche, **dadurch gekennzeichnet, dass** die beiden Reflexionsflächen in einem 90°-Winkel aufeinanderstoßen.

6. Leuchte (14) nach einem der vorhergehenden Ansprüche, **dadurch gekennzeichnet, dass** das Umlenkprisma (38) die Form eines Porro-Prismas, also die Form eines Prismas mit rechtwinkliger und gleichschenkliger Basisfläche aufweist.

7. Leuchte (14) nach Anspruch 2, **dadurch gekennzeichnet, dass** die gemeinsame Kante (46) in Bezug auf eine Breite (b) der ersten Längsseite, aus der das Umlenkelement (36) herausragt, in der Mitte liegt.

8. Leuchte (14) nach Anspruch 2 oder 7, **dadurch gekennzeichnet, dass** die beiden Reflexionsflächen (40, 42) symmetrisch mit der gemeinsamen Kante (46) als Symmetrieachse sind.

9. Leuchte (14) nach einem der vorhergehenden Ansprüche, **dadurch gekennzeichnet, dass** die Reflexionsflächen (40, 42) entgegen der Hauptausbreitungsrichtung des Lichtes im Lichtleiter (18) geneigt angeordnet sind.

10. Leuchte (14) nach einem der vorhergehenden Ansprüche, **dadurch gekennzeichnet, dass** die Breite des Umlenkelements (36) außerhalb des Umlenkprismas (38) bevorzugt der Breite (b) des Lichtleiterabschnitts entspricht, aus dem das Umlenkelement (36) herausragt.

11. Leuchte (14) nach einem der vorhergehenden Ansprüche, **dadurch gekennzeichnet, dass** eine Deckfläche (50) des Umlenkelements (36), die zwischen einer dritten Längsseite (28) und einer vierten Längsseite (28) des Lichtleiters (18) sowie zwischen der Spitze (52) des Umlenkprismas (38) und dem in dem ersten Abstand vor der Lichteintrittsfläche (32) liegenden Übergang (54) von der ersten Lichtleiterseite (24) in das Umlenkelement (36) liegt, eine ebene Fläche ist.

12. Leuchte (14) nach einem der vorhergehenden Ansprüche, **gekennzeichnet durch** in die Lichtaustrittsfläche eingeformte lichtstreuende und/oder lichtsammelnde Umlenkstrukturen.

13. Leuchte (14) nach einem der vorhergehenden Ansprüche, **dadurch gekennzeichnet, dass** der Lichtleiter (18) ein flächiger Lichtleiter ist, der mehrere Stellen zur Einkopplung von Licht aufweist.

14. Leuchte (14) nach einem der vorhergehenden Ansprüche, **dadurch gekennzeichnet, dass** ein zwischen den gedanklich auf eine Längsseite des Lichtleiters (18) aufgesetzten Umlenkelementen (36) und der gegenüberliegenden Längsseite liegender Querschnitt des Lichtleiters (18) mit zunehmendem Abstand vom Ort der Lichteinkopplung immer kleiner wird.

15. Leuchte (14) nach einem der vorhergehenden Ansprüche, **dadurch gekennzeichnet, dass** die Größe der Umlenkelemente (36) mit zunehmender Entfernung von der Lichteinkopplung anwächst.

## Claims

1. Motor vehicle lamp (14) having a light guide (18) which has a first longitudinal side (24) and a second longitudinal side (26) opposite the first longitudinal side (24), and which has deflection elements (36) arranged on its first longitudinal side (24), which are designed to deflect light incident on them from the inside of the light guide (18) to the second longitudinal side (26) in such a way that the deflected light impinges there so steeply that it emerges from the light guide (18) via the second longitudinal side (26), wherein said deflecting elements (36) comprise a deflecting prism (38) having a first reflecting surface (40) and a second reflecting surface (42) adapted to transmit light that propagates within said elongated light guide (18) following the shape of said light guide (18) and thereby impinge on one of said reflecting surfaces (40, 42), first deflect it towards the respective other of the two reflecting surfaces (40, 42) in such a way that the sum of the deflections occurring on the two reflecting surfaces (40, 42) results in the said deflection towards the second longitudinal side (26).

2. Lamp (14) according to claim 1, **characterised in that** the two reflecting surfaces (40, 42) have a common edge (46) and form a reverse prism in the form of a roof edge reflector.

3. Lamp (14) according to one of the preceding claims, **characterised in that** it comprises a light source (20) which, in relation to the arrangement of the light guide (18) relative to a central longitudinal axis (10) of the vehicle, is arranged at a proximal end of the light guide, when the lamp is mounted to the vehicle.

4. Lamp (14) according to claim 3, **characterised in that** the light source is a semiconductor light source comprising one or more light emitting diodes, the diodes emitting either light of the same colour or light of different signal colours in the alternative where there is a plurality of diodes.

5. Lamp (14) according to one of the preceding claims, **characterised in that** the two reflecting surfaces meet at a 90° angle.

6. Lamp (14) according to one of the preceding claims, **characterised in that** the deflecting prism (38) has the shape of a porro-prism, i.e. the shape of a prism with a rectangular and isosceles base surface.

7. Lamp (14) according to claim 2, **characterised in that** the common edge (46) is in the centre with respect to a width (b) of the first longitudinal side from which the deflecting element (36) projects.

8. Lamp (14) according to claim 2 or 7, **characterized in that** the two reflecting surfaces (40, 42) are symmetrical with the common edge (46) as axis of symmetry.

9. Lamp (14) according to one of the preceding claims, **characterised in that** the reflecting surfaces (40, 42) are arranged inclined against the main direction of propagation of the light in the light guide (18).

10. Lamp (14) according to one of the preceding claims, **characterised in that** the width of the deflecting element (36) outside the deflecting prism (38) preferably corresponds to the width (b) of the light guide section from which the deflecting element (36) projects.

11. Lamp (14) according to one of the preceding claims, **characterized in that** a cover surface (50) of the deflecting element (36), which is located between a third longitudinal side (28) and a fourth longitudinal side (28) of the light guide (18) and between the tip (52) of the deflecting prism (38) and the transition (54) from the first light guide side (24) into the deflecting element (36), which transition is located at the first distance in front of the light entry surface (32), is a flat surface.

12. Lamp (14) according to one of the preceding claims, **characterised by** light-diffusing and/or light-collecting deflecting structures moulded into the light-emitting surface.

13. Lamp (14) according to one of the preceding claims, **characterised in that** the light guide (18) is a flat light guide which has several points for coupling in light.

14. Lamp (14) according to one of the preceding claims, **characterised in that** a cross-section of the light guide (18) lying between the deflecting elements (36), which are mentally placed on one longitudinal side of the light guide (18), and the opposite longitudinal side becomes smaller and smaller with increasing distance from the point of light input.

15. Lamp (14) according to one of the preceding claims, **characterised in that** the size of the deflecting elements increases with increasing distance from the light input.

## Revendications

1. Lampe de véhicule à moteur (14) avec un guide de lumière (18) qui présente un premier côté longitudinal (24) et un deuxième côté longitudinal (26) opposé au premier côté longitudinal (24), et qui présente des éléments de renvoi (36) agencés sur son premier côté longitudinal (24) et conçus pour renvoyer de la lumière qui les impacte de l'intérieur du guide de lumière (18), vers le deuxième côté longitudinal (26), de façon telle que la lumière renvoyée y frappe de façon si raide qu'elle sorte du guide de lumière (18) par le deuxième côté longitudinal (26), les éléments de renvoi (36) présentant un prisme de renvoi (38) avec une première surface réfléchissante (40) et une seconde surface réfléchissante (42) conçues pour d'abord renvoyer de la lumière, qui se propage à l'intérieur du guide de lumière (18) allongé en suivant la forme du guide de lumière (18) et arrive sur l'une des deux surfaces réfléchissantes (40, 42), vers respectivement l'autre des deux surfaces réfléchissantes (40, 42) d'une façon telle que ledit renvoi vers le deuxième côté longitudinal (26) représente la somme des renvois intervenant sur les deux surfaces réfléchissantes (40, 42).

2. Lampe (14) selon la revendication 1, **caractérisée en ce que** les deux surfaces réfléchissantes (40, 42) présentent un bord commun (46) et forment un prisme inverseur se présentant sous la forme d'un réflecteur de bord de toit.

3. Lampe (14) selon l'une quelconque des revendications précédentes, **caractérisée en ce qu'**elle comprend une source lumineuse (20) qui, en lien avec l'agencement du guide de lumière (18), est agencée à une extrémité proximale du guide de lumière par rapport à un axe longitudinal central du véhicule (10) lorsque la lampe de véhicule (14) est fixée sur le véhicule.

4. Lampe (14) selon la revendication 3, **caractérisée en ce que** la source lumineuse (20) est une source de lumière à semi-conducteur qui comprend une ou plusieurs diode(s) électroluminescente(s), dans la variante à plusieurs diodes, les diodes émettant de la lumière isochromatique ou de la lumière de différentes couleurs de signalisation.

5. Lampe (14) selon l'une quelconque des revendications précédentes, **caractérisée en ce que** les deux surfaces réfléchissantes se rejoignent avec un angle de 90°.

6. Lampe (14) selon l'une quelconque des revendications précédentes, **caractérisée en ce que** le prisme de renvoi (38) présente la forme d'un prisme de Porro, c'est-à-dire la forme d'un prisme avec une surface de base rectangulaire et isocèle.

7. Lampe (14) selon la revendication 2, **caractérisée en ce que** le bord commun (46) se situe au centre d'une largeur (b) du premier côté longitudinal à partir duquel fait saillie l'élément de renvoi (36).

8. Lampe (14) selon la revendication 2 ou 7, **caractérisée en ce que** les deux surfaces réfléchissantes (40, 42) sont symétriques en prenant le bord commun (46) comme axe de symétrie.

9. Lampe (14) selon l'une quelconque des revendications précédentes, **caractérisée en ce que** les surfaces réfléchissantes (40, 42) sont agencées inclinées à l'encontre de la direction principale de propagation de la lumière dans le guide de lumière (18).

10. Lampe (14) selon l'une quelconque des revendications précédentes, **caractérisée en ce que** la largeur de l'élément de renvoi (36) à l'extérieur du prisme de renvoi (38) correspond de manière préférée à la largeur (b) de la section de guide de lumière à partir de laquelle fait saillie l'élément de renvoi (36).

11. Lampe (14) selon l'une quelconque des revendications précédentes, **caractérisée en ce qu'**une surface supérieure (50) de l'élément de renvoi (36), qui s'étend entre un troisième côté longitudinal (28) et un quatrième côté longitudinal (28) du guide de lumière (18) et entre la pointe (52) du prisme de renvoi (38) et la jonction (54), située dans le premier espacement devant la surface d'entrée de lumière (32), du premier côté de guide de lumière (24) avec l'élément de renvoi (36), est une surface plane.

12. Lampe (14) selon l'une quelconque des revendications précédentes, **caractérisée par** des structures de renvoi diffusant et/ou collectant de la lumière et moulées dans la surface de sortie de lumière.

13. Lampe (14) selon l'une quelconque des revendications précédentes, **caractérisée en ce que** le guide de lumière (18) est un guide de lumière plat présentant plusieurs points de couplage d'entrée de lumière.

14. Lampe (14) selon l'une quelconque des revendications précédentes, **caractérisée en ce qu'**une section transversale du guide de lumière (18), s'étendant entre les éléments de renvoi (36) placés de manière théorique sur un côté longitudinal du guide de lumière (18) et le côté longitudinal opposé, se réduit avec l'accroissement de la distance par rapport à l'emplacement du couplage de lumière.

15. Lampe (14) selon l'une quelconque des revendications précédentes, **caractérisée en ce que** la taille des éléments de renvoi (36) augmente avec l'accroissement de l'éloignement par rapport au couplage d'entrée de lumière.
